# EUROPÄISCHE PATENTSCHRIFT

(11) **EP 0 395 708 B1**
(45) Veröffentlichungstag und Bekanntmachung des Hinweises auf die Patenterteilung: **30.06.1993**
(21) Anmeldenummer: 89900598.7
(22) Anmeldetag: 12.12.1988
(51) Int. Cl.: H01R 13/66

(54) **VERBINDUNGSSTÜCK**
COUPLING PART
CONNECTEUR

(30) Priorität: 24.12.1987 DE 3744124
(43) Veröffentlichungstag der Anmeldung: 07.11.1990
(73) Patentinhaber: Deutsche Thomson-Brandt GmbH, 78003 Villingen-Schwenningen (DE)
(72) Erfinder: GLEIM, Günter, D-7730 Villingen-Schwenningen (DE); QUANDT, Siegfried, D-7730 Villingen-Schwenningen (DE)
(86) Internationale Anmeldenummer: EP8801142
(87) Internationale Veröffentlichungsnummer: WO8906057

(56) Entgegenhaltungen:
- EP-A- 0 164 993
- DE-A- 3 338 232
- Pa-t-en t A bst

## Beschreibung

Die Erfindung betrifft ein Verbindungsstück, an das ein Gegenstück paßt und an das ein Kabel mit mindestens einer Ader und mindestens einer Isolationsschicht anschließbar ist.

Derartige Verbindungsstücke sind z.B. Stecker und Buchsen, an die ein Kabel angeschlossen sein kann. Mittels eines Steckers und einer Buchse lassen sich zwei Kabel miteinander verbinden oder ein Kabel an ein Gerät anschließen. In der Nachrichtentechnik werden z.B. neben Elektrokabeln auch Lichtleiterkabel verwendet. Für jeden dieser beiden Kabeltypen ist ein entsprechendes Verbindungsstück nötig.

Aus der DE-OS 33 38 232 ist ein Steckerelement bekannt, an das ein elektrisches Kabel mit mehreren isolierten Adern angeschlossen ist. Zusätzlich zu den elektrischen Adern ist ein optischer Meldeleiter vorgesehen, der an seinem einen Ende mit einem optischen Sender und an seinem anderen Ende mit einem optischen Empfänger verbunden ist. Der optische Sender und der optische Empfänger sitzen in je einem Steckerelement. Die Steckerelemente sind jedoch nur mit elektrischen Kontakten ausgerüstet. Es ist daher nicht möglich, optische Signale mittels zweier ineinander gesteckter Steckerelemente zu übertragen.

Aus der EP-A 0 164 993 ist ein Verbindungsstück für einen Lichtleiter bekannt, das zusätzlich mit einem elektrischen Kontakt für eine elektrische Ader ausgerüstet ist. Um sowohl optische als auch elektrische Signale übertragen zu können, sind an dieses Verbindungsstück deshalb ein Lichtleiter und zusätzlich ein elektrisches Kabel anzuschließen.

Es ist nun Aufgabe der Erfindung, ein Verbindungsstück derart zu gestalten, daß es bei Anschluß an ein Kabel mit mindestens einer Ader und einer lichtdurchlässigen Isolationsschicht sowohl elektrische als auch optische Signale übertragen kann.

Die Erfindung löst diese Aufgabe dadurch, daß an der Stelle, wo die Isolationsschicht des Kabels anliegt, das Verbindungsstück zur optischen Kopplung lichtdurchlässig gestaltet ist.

Es zeigen
- Figur 1: ein Ausführungsbeispiel eines erfindungsgemäßen Verbindungsstücks
- Figur 2: ein zum Ausführungsbeispiel passendes Gegenstück
- Figur 3: eine Zusammenschaltung der Verbindungsstücke aus Figur 2 und 3
- Figur 4: ein Nachrichtenübertragungssystem aus einem Videorecorder und einem Fernsehgerät.

Anhand der Figuren wird die Erfindung nun erläutert.

Bei einer Kombination aus einem Videorecorder V und einem Fernsehgerät F werden die Videosignale über ein Koaxialkabel übertragen. Die neben den Videosignalen auch zu übertragenden Steuersignale können z.B. auf optischem Weg übertragen werden, wenn die als Dielektrikum wirkende Isolationsschicht zwischen dem Innen- und dem Außenleiter des Koaxialkabels aus optisch leitendem Material gefertigt ist. Bei anderen Geräten der Unterhaltungselektronik, z.B. zwischen einem CD-Spieler und einem Verstärker, werden Nachrichten über ein einfaches Kabel übertragen. Auch hier lassen sich weitere Nachrichtenkanäle schaffen, wenn die Isolationsschicht des Kabels aus optisch leitendem Material besteht. Es können daher außer den elektrischen Signalen oder der Netzspannung bei einem Netzkabel auch optische Signale übertragen werden, wenn die Isolationsschicht des Kabels aus optisch leitendem Material gefertigt ist. Um derartige Kabel miteinander zu verbinden oder an ein Gerät anzuschließen, sind aber besondere Verbindungsstücke nötig.

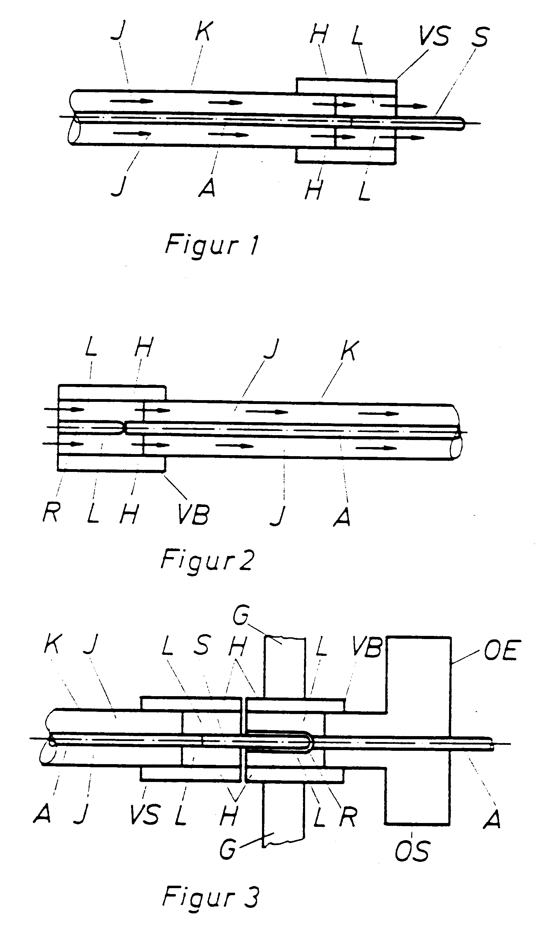

In der Figur 1 ist ein als Stecker ausgeführtes Verbindungsstück VS gezeigt, an das ein einadriges Kabel K angeschlossen ist.

Der Stecker VS ist nach außen von einer röhrenförmigen Hülse H abgeschlossen, die teilweise über das Kabel K gesteckt wird. Im Inneren der Hülse H ist zentral ein Stift S angeordnet, der mit der Ader A des Kabels K elektrisch leitend verbunden ist. Zwischen dem Stift S und der röhrenförmigen Hülse H ist eine röhrenförmige optische Kupplung L eingebettet, für die vorzugsweise der gleiche Querschnitt wie für die Isolationsschicht I des Kabels gewählt ist. Die Isolationsschicht I des Kabels K kann an der optischen Kupplung L anliegen, muß es jedoch nicht, weil durch einen leeren Raum zwischen der Isolationsschicht I und der optischen Kupplung L die optische Verbindung höchstens gedämpft, keineswegs aber unterbrochen wird. Das durch Pfeile angedeutete Licht strahlt von der Isolationsschicht I in die optische Kupplung L, an deren Stirnseite es austritt und z.B. in die optische Kupplung einer zum Stecker passenden Buchse VB strahlt, die in Figur 2 im Längsschnitt dargestellt ist.

Die Buchse VB in Figur 2 ist nach außen von einer Hülse H abgeschlossen, die teilweise über das Kabel K gesteckt wird. Im Innern der Hülse H ist zentral eine röhrenförmige Öffnung R zur Aufnahme des Stiftes S des Steckers VS angeordnet, die mit der Ader A des Kabels K leitend verbunden ist. Zwischen der röhrenförmigen Öffnung R zur Aufnahme des Stiftes S des Steckers VS ist eine ebenfalls röhrenförmige optische Kupplung L eingebettet, für die vorzugsweise der gleiche Querschnitt wie für die Isolationsschicht I des Kabels K gewählt ist. Wie beim Stecker VS aus Figur 1 kann die Isolationsschicht I des Kabels K an der optischen Kupplung L anliegen, muß es aber nicht, weil durch einen leeren Raum zwischen der Isolationsschicht I und der optischen Kupplung L die optische Verbindung nicht unterbrochen wird. Das durch Pfeile angedeutete Licht tritt von der optischen Kupplung L des in Figur 1 gezeigten Steckers VS kommend in die optische Kupplung L der Buchse VB ein, an deren Ende es in die Isolationsschicht I des Kabels K strahlt.

Das Kabel K kann z.B. mittels bekannter Schraub-, Quetsch- oder Lötverbindungen in dem Stecker VS oder der Buchse VB befestigt sein. Mittels eines Feder- oder Schleifkontaktes wird der Stift S des Stecker VS in der röhrenförmigen Öffnung R der Buchse VB gehalten und die elektrische Verbindung zwischen dem Stift S und der röhrenförmigen Öffnung R hergestellt.

Wenn z.B. wie in Figur 1 das Licht von der lichtdurchlässigen Isolationsschicht I in die optische Kupplung L strahlt, ist es vorteilhaft, den Querschnitt der optischen Kupplung L größer als den Querschnitt der Isolationsschicht I zu wählen, damit alles aus der Isolationsschicht I strahlende Licht von der optischen Kupplung L gesammelt wird.

Strahlt dagegen wie in Figur 2 das Licht von der optischen Kupplung L in die optisch leitende Isolationsschicht I des Kabels K, ist es vorteilhaft, den Querschnitt der optischen Kupplung L kleiner als den Querschnitt der Isolationsschicht I zu wählen, damit alles aus der optischen Kupplung L strahlende Licht von der Isolationsschicht I des Kabels K eingefangen wird.

Soll Licht abwechslungsweise in beide Richtungen übertragen werden, so ist es jedoch günstiger, für die optische Kupplung L und die Isolationsschicht I denselben Querschnitt zu wählen.

Die Buchse VB kann aber auch, wie in Figur 3 gezeigt ist, im Gehäuse G eines Gerätes angeordnet sein. An die Buchse VB ist das Kabel K mittels des Steckers VS angeschlossen. Auf der Geräteseite kann z.B. ein optischer Sender OS und/oder Empfänger OE an die optische Kupplung L der Buchse VB angeschlossen sein.

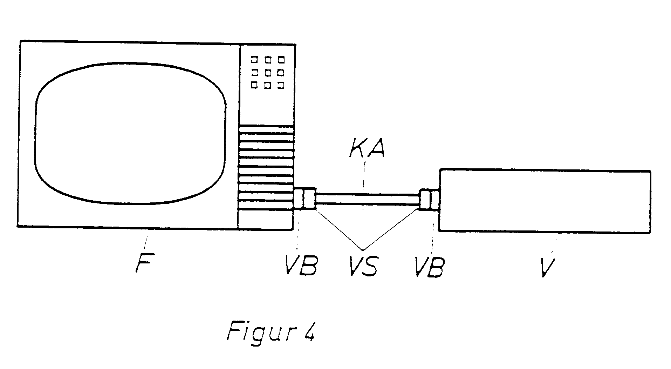

Anhand des in Figur 4 abgebildeten Nachrichtenübertragungssystems wird eine Möglichkeit erläutert, das erfindungsgemäße Verbindungsstück einzusetzen.

Ein Videorecorder V ist über ein Koaxialkabel KA, dessen als Dielektrikum wirkende Isolationsschicht aus optisch gut leitendem Material hergestellt ist, mit einem Fernsehgerät F verbunden. Die Enden des Koaxialkabels KA sind z.B. in Stecker VS gefaßt, wie sie in Figur 1 gezeigt sind. An den Geräten, dem Videorecorder V und dem Fernsehgerät F, sind zu den Steckern VS passende Buchsen VB angebracht, die an der Stelle, wo die optische Kupplung des Steckers VS anliegt, ebenfalls mit einer optischen Kupplung ausgestattet sind, an deren dem Stecker VS abgewandten Seite ein optischer Sender und/oder Empfänger angeschlossen ist. Beim jeweils sendenden Gerät strahlt das Licht vom optischen Sender durch die optische Kupplung der Buchse zur optischen Kupplung des Steckers, von dort durch das Koaxialkabel über die optische Kupplung des Steckers und der Buchse zum optischen Empfänger des jeweils empfangenden Gerätes.

Sowohl der Videorecorder V als auch das Fernsehgerät F können mit einem optischen Sender, z.B. einer Infrarotleuchtdiode und einem optischen Empfänger ausgestattet sein, um die Nachrichtenübertragung in beide Übertragungsrichtungen zu ermöglichen.

Weil die Videosignale auf elektrischem Weg, die Steuersignale dagegen auf optischem Weg übertragen werden, beeinflussen sie sich gegenseitig nicht und müssen außerdem in Videorecorder und im Fernsehgerät nicht voneinander getrennt werden. Schließlich sind für die Nachrichtenübertragung nicht zwei verschiedene Kabel und je zwei Anschlußbuchsen am Videorecorder und am Fernsengerät für die beiden Kabel vorzusehen.

Das erfindungsgemäße Verbindungsstück ist jedoch nicht auf den beschriebenen Anwendungsfall beschränkt. Mittels des erfindungsgemäßen Verbindungsstücks können zwischen zwei Geräten, z.B. Zwischenverstärker, Endgeräte, Datenstationen usw., beliebig Nachrichten jeder Art gleichzeitig sowohl auf elektrischem als auch auf optischem Weg übertragen werden.

Wie bereits erwähnt, ist das erfindungsgemäße Verbindungsstück für alle Kabel mit mindestens einer Ader und mindestens einer optisch leitenden Isolationsschicht geeignet, z.B. Koaxialkabel, Netzkabel, Flachbandkabel usw..

## Patentansprüche

1. Verbindungsstück (VS), an das ein Gegenstück (VB) paßt und an das ein Kabel (K) mit mindestens einer Ader (A) und mindestens einer Isolationsschicht (I) anschließbar ist, wobei das Verbindungsstück (VS, VB) mit mindestens einem elektrischen und einem optischen Kontakt ausgestattet ist, **dadurch gekennzeichnet**, daß an der Stelle, wo die Isolationsschicht (I) des Kabels (K) anliegt, das Verbindungsstück (VS, VB) zur optischen Kopplung lichtdurchlässig gestaltet ist.

2. Verbindungsstück nach Anspruch 1, **dadurch gekennzeichnet**, daß an der Stelle, wo die Isolationsschicht (I) des Kabels (K) anliegt, im Verbindungsstück (VS, VB) eine optische Kupplung (L) aus optisch leitendem Material vorgesehen ist.

3. Verbindungsstück nach Anspruch 2, **dadurch gekennzeichnet**, daß die optische Kupplung (L) röhrenförmig ausgebildet ist.

4. Verbindungsstück nach Anspruch 2 oder 3, **dadurch gekennzeichnet**, daß für die optische Kupplung (L) derselbe Querschnitt wie für die Isolationsschicht (I) des Kabels (K) gewählt ist.

5. Verbindungsstück nach Anspruch 2 oder 3, **dadurch gekennzeichnet**, daß der Querschnitt der optischen Kupplung (L) auf der dem Kabel (K) zugewandten Seite kleiner gewählt ist als der Querschnitt der Isolationsschicht (I) des Kabels (K).

6. Verbindungsstück nach Anspruch 2 oder 3, **dadurch gekennzeichnet**, daß der Querschnitt der optischen Kupplung (L) auf der dem Kabel (K) zugewandten Seite größer gewählt ist als der Querschnitt der Isolationsschicht (I) des Kabels (K).

7. Verbindungsstück nach Anspruch 2 bis 6, **dadurch gekennzeichnt**, daß die dem Kabel (K) zugewandte Stirnseite der optischen Kupplung (L) linsenförmig ausgebildet ist.

8. Verbindungsstück nach Anspruch 2 bis 7, **dadurch gekennzeichnet**, daß an die optische Kupplung (L) ein optischer Sender und/oder Empfänger anschließbar ist.

9. Verbindungsstück nach Anspruch 2 bis 8, **dadurch gekennzeichnet**, daß das Verbindungsstück (VS, VB) am Gehäuse (G) eines Gerätes angebracht ist.

10. Verbindungsstück nach Anspruch 9, **dadurch gekennzeichnet**, daß an das am Gehäuse (G) des Gerätes angebrachte Verbindungsstück (VB) das passende Gegenstück (VS) angeschlossen ist, an das ein Kabel (K) mit einer optisch leitenden Isolationsschicht (I) angeschlossen ist.

11. Verbindungsstück nach Anspruch 2 bis 10, **dadurch gekennzeichnet**, daß das Verbindungsstück (VS) als Stecker ausgeführt ist.

12. Verbindungsstück nach Anspruch 2 bis 11, **dadurch gekennzeichnet**, daß das Verbindungsstück (VB) als Buchse ausgeführt ist.

## Claims

1. Coupling part (connecting piece) (VS), onto which a counterpart (VB) fits and onto which a cable (K) with at least one load (A) and at least one insulating layer (I) can be connected, whereby the coupling part (VS, VB) is equipped with at least one electrical and one optical contact, **characterized in that** at the point where the insulating layer (I) of the cable (K) adjoins, the coupling part (VS, VB) is designed to allow light to pass through for the optical coupling.

2. Coupling part according to claim 1, **characterized in that** at the point where the insulating layer (I) of the cable (K) adjoins, an optical coupling (L) made from optically conductive material is provided in the coupling part (VS, VB).

3. Coupling part according to claim 2, **characterized in that** the optical coupling (L) is built in tubular form.

4. Coupling part according to claim 2 or 3, **characterized in that** the same cross-section is chosen for the optical coupling (L) as for the insulating layer (I) of the cable (K).

5. Coupling part according to claim 2 or 3, **characterized in that** the cross-section of the optical coupling (L) is chosen to be smaller on the side facing the cable (K) than the cross-section of the insulating layer (I) of the cable (K).

6. Coupling part according to claim 2 or 3, **characterized in that** the cross-section of the optical coupling (L) is chosen to be larger on the side facing the cable (K) than the cross-section of the insulating layer (I) of the cable (K).

7. Coupling part according to claim 2 to 6, **characterized in that** the front face of the optical coupling (L) facing the cable (K) is built in the form of a lens.

8. Coupling part according to claim 2 to 7, **characterized in that** an optical transmitter and/or receiver can be connected to the optical coupling (L).

9. Coupling part according to claim 2 to 8, **characterized in that** the coupling part (VS, VB) is fitted on the housing (G) of a device.

10. Coupling part according to claim 9, **characterized in that** the matching counterpart (VS) is connected to the coupling part (VB) fitted onto the housing (G) of the device, and that a cable (K) with an optically conductive insulating layer (I) is connected to said counterpart.

11. Coupling part according to claim 2 to 10, **characterized in that** the coupling part (VS) is realized as a plug.

12. Coupling part according to claim 2 to 11, **characterized in that** the coupling part (VB) is realized as a socket.

## Revendications

1. Connecteur (VS) auquel correspond un pendant (VB) et auquel un câble (K) avec au moins un brin (A) et au moins une couche isolante (I) peut être raccordé, le connecteur (VS, VB) étant équipé d'au moins un contact électrique et un contact optique, **caractérisé en ce** que le connecteur (VS, VB) est configuré en étant perméable à la lumière pour réaliser le couplage optique à l'endroit où la couche isolante (I) du câble (K) adhère

2. Connecteur selon la revendication 1, **caractérisé en ce** qu'il est prévu dans le connecteur (VS, VB) un couplage optique (L) en une matière conductrice optiquement à l'endroit où la couche isolante (I) du câble (K) adhère.

3. Connecteur selon la revendication 2, **caractérisé en ce** que le couplage optique (L) est configuré de forme tubulaire.

4. Connecteur selon la revendication 2 ou 3, **caractérisé en ce** que la même section que pour la couche isolante (I) du câble (K) est choisie pour le couplage optique.

5. Connecteur selon la revendication 2 ou 3, **caractérisé en ce** que la section du couplage optique (L) est choisie plus petite sur le côté qui est tourné vers le câble (K) que la section de la couche isolante (I) du câble (K).

6. Connecteur selon la revendication 2 ou 3, **caractérisé en ce** que la section du couplage optique (L) est choisie plus grande sur le côté qui est tourné vers le câble (K) que la section de la couche isolante (I) du câble (K).

7. Connecteur selon la revendication 2 à 6, **caractérisé en ce** que la face de devant du couplage optique (L) qui est tournée vers le câble (K) est configurée en étant lenticulaire.

8. Connecteur selon la revendication 2 à 7, **caractérisé en ce** qu'un émetteur et/ou récepteur optique peut être raccordé au couplage optique (L).

9. Connecteur selon la revendication 2 à 8, **caractérisé en ce** que le connecteur (VS, VB) est fixé au bâti (G) d'un appareil (G).

10. Connecteur selon la revendication 9, **caractérisé en ce** que le pendant (VS) correspondant est raccordé au connecteur (VB) fixé au bâti (G) de l'appareil, pendant auquel un câble (K) avec une couche isolante (I) conductrice optiquement est raccordé.

11. Connecteur selon la revendication 2 à 10, **caractérisé en ce** que le connecteur (VS) est réalisé comme une fiche.

12. Connecteur selon la revendication 2 à 11, **caractérisé en ce** que le connecteur (VB) est réalisé comme une douille.
